Europäisches Patentamt

European Patent Office

Office européen des brevets

(19)

(11) **EP 1 181 796 B1**

(12) **FASCICULE DE BREVET EUROPEEN**

(45) Date de publication et mention
de la délivrance du brevet:
**12.10.2005 Bulletin 2005/41**

(51) Int Cl.[7]: **H04L 25/49**, H03K 7/10

(86) Numéro de dépôt international:
**PCT/FR2000/003589**

(21) Numéro de dépôt: **00993565.1**

(22) Date de dépôt: **19.12.2000**

(87) Numéro de publication internationale:
**WO 2001/047201 (28.06.2001 Gazette 2001/26)**

(54) **PROCEDE DE TRANSMISSION D'INFORMATIONS D'UN DISPOSITIF INTERROGATEUR VERS DES OBJETS PORTATIFS**

VERFAHREN ZUR INFORMATIONSÜBERTRAGUNG VON EINER ABFRAGEVORRICHTUNG ZU TRAGBAREN GEGENSTÄNDEN

METHOD FOR TRANSMITTING DATA FROM AN INTERROGATING DEVICE TO PORTABLE OBJECTS

(84) Etats contractants désignés:
**DE ES GB IT NL**

(30) Priorité: **20.12.1999 FR 9916067**

(43) Date de publication de la demande:
**27.02.2002 Bulletin 2002/09**

(73) Titulaire: **Commissariat à l'Energie Atomique
75752 Paris 15ème (FR)**

(72) Inventeurs:
• **CROCHON, Elisabeth
F-38320 Poisat (FR)**
• **THOMAS, Thierry
F-38760 Varces-Allieres et Risset (FR)**
• **BOUVIER DES NOES, Mathieu
F-38000 Grenoble (FR)**

(74) Mandataire: **Poulin, Gérard et al
Société BREVATOME
3, rue du Docteur Lancereaux
75008 Paris (FR)**

(56) Documents cités:
**EP-A- 0 681 192      US-A- 5 684 871
US-A- 5 844 942**

## Description

### Domaine technique

La présente invention a pour objet un procédé de transmission d'informations d'un dispositif interrogateur vers des objets portatifs.

Elle trouve une application dans le domaine de la télébillettique, de la grande production, du tri d'objets, du contrôle d'accès, et plus généralement dans les applications ne nécessitant pas les mêmes caractéristiques en termes de portée, de débit binaire, de résistance au bruit ou de respect des normes d'émission radio, selon la phase d'utilisation de l'objet portatif. Ces caractéristiques peuvent changer par exemple entre une phase d'initialisation individuelle à haut débit et des phases d'identification à plus bas débit.

Dans une application privilégiée, les objets portatifs sont des étiquettes radiofréquence.

### Etat de la technique antérieure

Un certain nombre de normes sont en cours d'élaboration pour uniformiser la transmission d'informations d'un dispositif interrogateur vers des objets portatifs comme des étiquettes radiofréquence. Ces normes ou projets de normes recommandent, en général, une modulation d'amplitude d'une onde porteuse pendant certains intervalles de temps et un codage en position de ces intervalles. Mais les techniques ainsi définies posent des problèmes, notamment en ce qui concerne le repérage de la position de ces intervalles. Elles présentent également des difficultés lorsque l'étiquette est asynchrone, c'est-à-dire possède son propre oscillateur local, indépendant de la fréquence de l'onde porteuse.

L'invention a justement pour but de remédier à ces inconvénients.

US-A-5 684 871 décrit un tel système de transmision d'informations dont une modulation de fréquence et un codage en position des intervalles est utilisé.

### Exposé de l'invention

Pour permettre de repérer avec précision la position des intervalles de modulation, que l'on appellera par la suite "impulsions", l'invention préconise la formation d'une première impulsion destinée à constituer une référence et d'une seconde impulsion, dont la position est repérée par rapport à la première, position qui définit l'information transmise. Encore faut-il ne pas courir le risque de confondre, dans le flot d'impulsions qui s'écoule du dispositif interrogateur vers les étiquettes, les premières impulsions et les secondes. A cette fin, l'invention propose de les distinguer en utilisant une modulation d'amplitude ternaire de l'onde porteuse (et non plus binaire), ce qui autorise deux modulations différentes, qui sont affectées respectivement aux deux types impulsions.

De façon plus précise, la présente invention a pour objet un procédé de transmission d'informations d'un dispositif interrogateur vers des objets portatifs, dans lequel la transmission s'effectue par modulation d'amplitude d'une onde porteuse radioélectrique pendant certains intervalles de temps dits "impulsions" et par codage en position de ces impulsions, caractérisé en ce que :

- la modulation d'amplitude est une modulation ternaire mettant en oeuvre un premier niveau d'amplitude, un deuxième niveau inférieur au premier et un troisième niveau supérieur au premier, la modulation faisant passer soit du premier niveau au deuxième et étant dite alors de polarité négative, soit du premier niveau au troisième et étant dite alors de polarité positive,
- le codage en position est obtenu en formant deux impulsions de polarités opposées, la position en question étant celle de la seconde impulsion par rapport à la première.

De préférence, les informations sont groupées en messages comprenant une suite de motifs associés chacun à un symbole d'information. Chaque motif comprend alors une zone temporelle de codage découpée en une pluralité de N unités de temps identiques, de durée $T_c$ au moins égale à la durée des impulsions, la première impulsion étant placée avant cette zone et la seconde étant placée dans l'une quelconque des N unités de temps de la zone.

De préférence encore, le nombre N d'unités de temps est égal à $2^M$, où M est un entier, le symbole d'information transmis par chaque motif étant alors un mot binaire de M bits.

Pour relâcher les contraintes sur la valeur de la largeur des impulsions, on peut prévoir un premier temps de garde, de durée égale à un multiple de l'unité de temps $T_c$, et placé entre la première impulsion et le début de la zone temporelle de codage.

On peut également prévoir un second temps de garde, de durée égale à un multiple de l'unité de temps $T_c$, et placé après la zone temporelle de codage.

Avec ces temps de garde, le risque d'avoir deux impulsions accolées disparaît, ce qui facilite la détection d'une transition entre une impulsion de polarité positive et une impulsion de polarité négative.

Selon un mode de mise en oeuvre avantageux, on peut prévoir encore un temps d'attente disposé après la zone temporelle de codage: La durée de ce temps d'attente n'est pas prise en compte par l'étiquette, qui attend l'impulsion de début de motif aussi longtemps qu'il le faut. Ce temps d'attente peut être modifié d'un motif à l'autre selon les informations transmises et la distance de transmission. Ce temps d'attente est également utile pour respecter certaines normes car il permet de diminuer la puissance moyenne émise dans les bandes latérales du spectre de transmission qui doit être inférieure au seuil autorisé relativement à la puissance de la porteuse. En jouant sur le temps d'attente, on peut éviter cet inconvénient.

Le temps d'attente peut donc varier en fonction :

- des normes locales d'émission,
- de la structure du dispositif d'interrogation,
- du protocole (ou modalités) de transmission entre le dispositif d'interrogation et les étiquettes,
- de l'application (courte ou longue distance, robustesse au bruit, conformité aux normes, débit binaire).

Comme souvent dans ces techniques, le message peut être organisé en trames, chaque trame comprenant un premier motif appelé "fanion de début de trame", des motifs d'information et un dernier motif appelé "fanion de fin de trame". Selon l'invention, le fanion de début de trame comprend deux impulsions de même polarité. Ce motif ne correspond donc à aucun motif d'information puisqu'un tel motif requiert des polarités différentes pour les impulsions. Le fanion de début de trame se distingue donc aisément des autres motifs. Un avantage d'un tel fanion est de fournir un étalon de temps à l'étiquette, laquelle peut ainsi estimer la durée des intervalles de la zone temporelle de codage. Cet avantage est particulièrement utile dans le cas d'étiquettes asynchrones pourvues d'un oscillateur local indépendant de la fréquence de l'onde porteuse.

Quant au fanion de fin de trame, il peut être constitué par une seule impulsion, ce qui le distingue encore d'un motif d'information.

Dans toutes ces variantes, la première impulsion des fanions de début ou de fin de trame ou celle des motifs d'information est de préférence de polarité négative, la modulation réduisant alors l'amplitude de la porteuse. Mais on ne sortirait pas du cadre de l'invention en renversant toutes les polarités.

## Brève description des dessins

- la figure 1 illustre un motif relatif à un symbole d'information ;
- la figure 2 illustre une trame avec un fanion de début de trame, deux motifs d'information et un fanion de fin de trame ;
- la figure 3 montre une trame avec temps de garde ;
- la figure 4 montre une trame avec temps d'attente et temps de garde ;
- la figure 5 illustre un exemple de transaction avec entrelacement des messages.

## Description de modes particuliers de mise en oeuvre

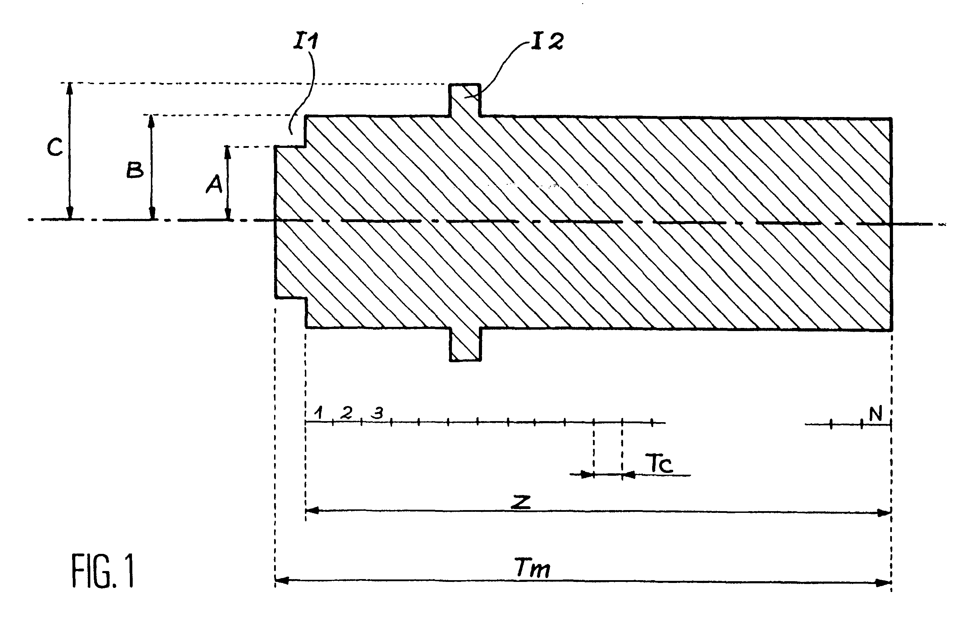

On voit, sur la figure 1, un motif correspondant à un symbole d'information. La zone hachurée symbolise l'amplitude de la porteuse radioélectrique. Le motif représenté comprend une première impulsion $I_1$ de polarité négative, autrement dit avec un indice de modulation négatif et une seconde impulsion $I_2$, de polarité positive, autrement dit avec un indice de modulation positif. On rappelle qu'un indice de modulation est défini comme le rapport de la différence des niveaux de la porteuse à la somme des niveaux de cette porteuse. En désignant par A, B et C les trois amplitudes possibles pour la porteuse, avec A<B<C, on peut avoir, dans une modulation ternaire, deux indices de modulation, respectivement de polarité négative et positive :

$$m^- = (B-A)/(A+B)$$

$$m^+ = (C-B)/(C+B)$$

A titre d'exemple, pour une fréquence de la porteuse $f_0 = 13,56$ MHz, on peut avoir $m^- = m^+ = 10\%$. Mais l'indice peut monter, par exemple, jusqu'à 50%.

Le motif représenté sur la figure 1 comprend une zone temporelle de codage Z divisée en N intervalles de durée $T_c$. Il y a donc N possibilités pour placer la seconde impulsion $I_2$. Si $N = 2^M$, où M est un entier, cela correspond à un symbole binaire à M bits. Pour M = 4, par exemple, on a N = 16 et des symboles à 4 bits.

La zone temporelle de codage Z est précédée de l'impulsion $I_1$ et la position, de $I_2$ par rapport à $I_1$, comptée en nombre de fois $T_c$, donne la valeur du symbole.

Le codage des informations peut être quelconque. On peut, par exemple, assigner à chaque position de $I_2$ un symbole binaire qui ne diffère du symbole correspondant à la position adjacente que par un bit, selon un codage dit de Gray. Mais tout autre codage est possible.

La période $T_c$, appelée aussi "chip", est de préférence égale à $nT_0$, si $T_0$ est la période de la porteuse, avec $T_0 = 1/f_0$. Par exemple, pour $f_0 = 13,56$ MHz, on peut prendre n = 128, d'où une durée $T_c$ de 9,4 µs.

La durée totale du motif est notée $T_m$. Avec N=16 et $T_c$=9,4 µs, on a $T_m$=159,8 µs.

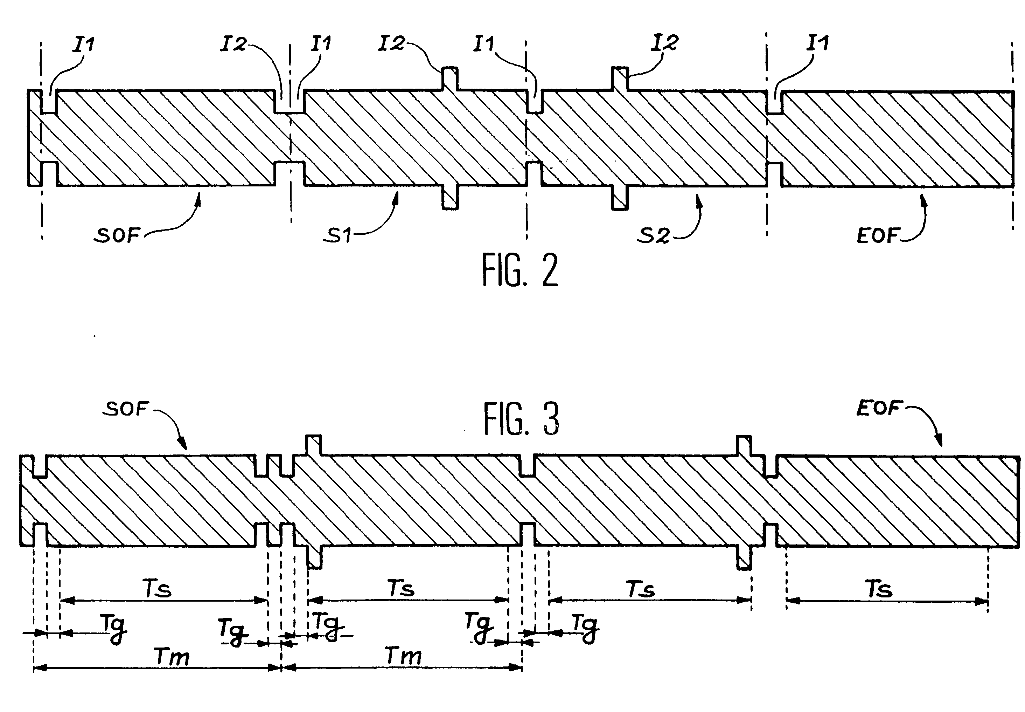

La figure 2 montre une trame comprenant deux motifs $S_1$, $S_2$ relatifs à deux symboles, un fanion de début de trame SOF ("Start of Frame") et un fanion de fin de trame EOF ("End of Frame"). Le fanion SOF est constitué d'une première impulsion $I_1$ de polarité négative et d'une seconde impulsion $I_2$ également de polarité négative. Cette combinaison de polarité viole la règle de codage de l'information (qui requiert des polarités opposées), de sorte que le motif SOF ne peut être confondu avec un motif d'information.

De préférence, dans le motif SOF, $I_2$ est placée le plus loin possible de $I_1$, c'est-à-dire en fin de zone temporelle, soit à une distance $NT_c$ de $I_1$, pour améliorer la précision. Mais cette seconde impulsion $I_2$ peut être placée dans une unité de temps autre que la dernière, mais toujours dans la même unité pour pouvoir servir de base de temps.

Le fanion EOF ne comprend qu'une seule impulsion $I_1$, ce qui constitue encore une violation de la règle de codage et évite toute confusion avec un motif d'information ou un fanion SOF.

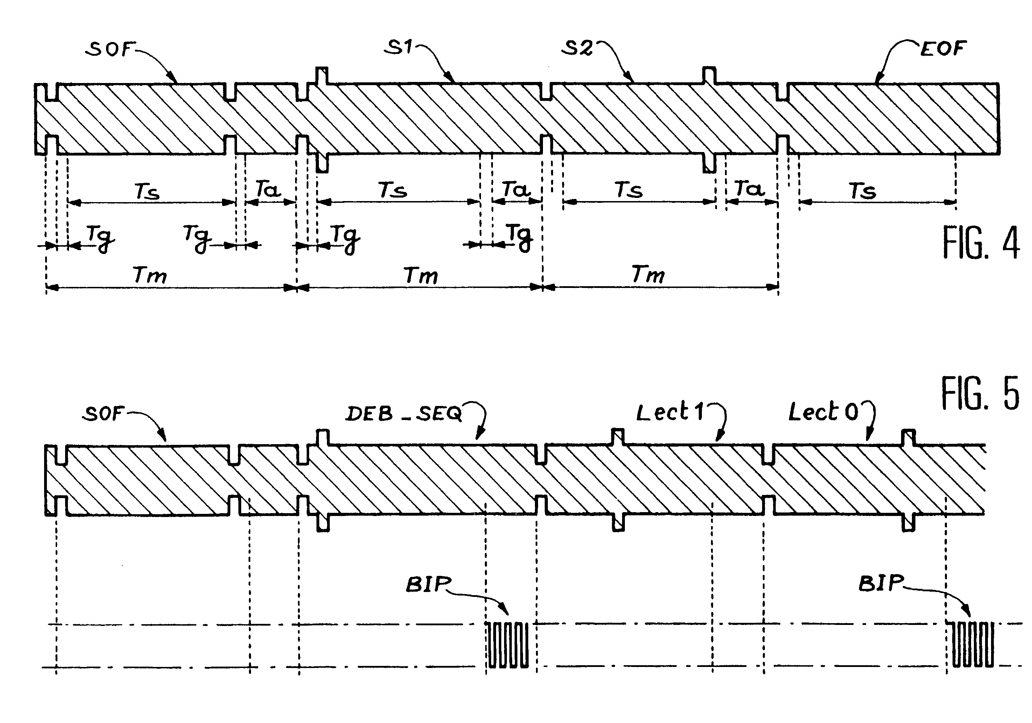

Dans la variante illustrée sur la figure 2, la durée totale du motif, soit $T_m$, est égale à $(N+1)T_c$. Cette durée peut être allongée par l'introduction de temps de garde et/ou de temps d'attente comme illustré sur les figures 3 et 4.

Sur la figure 3, tout d'abord, on voit que des temps de garde Tg sont ménagés juste après la première impulsion $I_1$ et après la seconde impulsion $I_2$. Ces temps de garde ne sont pas nécessairement égaux et peuvent prendre les valeurs $K_1T_c$ pour le premier et $K_2T_c$ pour le second, où $K_1$ et $K_2$ sont des entiers. Ces temps de garde allongent la durée du motif de la quantité $(K_1+K_2)T_c=KT_c$. On peut avoir, par exemple, $K_1=K_2=1$ et donc K=2.

Sur la figure 4, on note, en outre, la présence d'un temps d'attente $T_a$ en fin de motif. Ce temps peut être égal à $pT_c$ où p est un entier. Dans l'exemple illustré, la durée $T_m$ d'un motif est alors $(1+K_1+N+K_2+p)T_c$.

Le temps d'attente $T_a$ peut être réglé par le dispositif interrogateur sans aucune conséquence du côté de l'étiquette. Il n'est pas nécessaire de coder la valeur de ce temps dans un message envoyé au préalable.

Le dispositif interrogateur pourra calculer le temps d'attente selon les contraintes de l'application comme exposé ci-dessus. Typiquement, plus la distance de transmission est faible, plus la puissance du champ d'émission nécessaire pour téléalimenter l'étiquette est faible. Ceci réduit l'écart que le dispositif interrogateur doit maintenir entre l'amplitude de la porteuse et les bandes latérales liées à la transmission. La puissance des bandes latérales du spectre de transmission peuvent être alors plus importantes relativement à la puissance de la porteuse, le temps d'attente peut être ainsi réduit.

Ce temps d'attente pourra aussi être modifié selon le contenu du message du dispositif interrogateur ou selon la longueur du message de réponse de l'étiquette : d'une part, pour ajouter un aléa dans le cas d'une transmission d'un nombre important de codes identiques successifs, afin d'éviter l'apparition de raies dans le spectre de transmission ; d'autre part, pour gérer au mieux l'entrelacement des messages envoyés par l'interrogateur avec ceux renvoyés par l'étiquette.

S'agissant du débit d'informations binaires, on peut donner, à titre d'exemple non limitatif, les valeurs suivantes, pour N=16, K=2 et $T_c$=9,4 μs :

- pour $T_a$=0($T_m$=178 μs) : débit maximum: 22,4 kbits/s ;
- pour $T_a$=1,94 ms ($T_m$=2,12 ms) : débit nominal 1,89 kbits/s.

Un exemple de transaction avec entrelacement des messages provenant du dispositif interrogateur et des messages provenant des étiquettes est illustré sur la figure 5. Cet exemple correspond à un algorithme d'identification bit à bit dans lequel le dispositif interrogateur envoie un signal noté DEB-SEQ, qui ouvre une séquence d'identification, les étiquettes émettant en retour un signal noté "BIP" si le bit de rang n est un "1" et n'émettant rien si le bit de rang n est un "O". Le dispositif interrogateur répond aux étiquettes par un message traduisant ce qu'il a reçu, c'est-à-dire soit Lectl s'il a reçu un BIP, soit Lect0 s'il n'a rien reçu. Les étiquettes qui possèdent un bit identique à ce que le dispositif interrogateur a lu poursuivent le processus avec le bit suivant et ainsi de suite jusqu'au dernier bit du code d'identification de l'étiquette.

**Revendications**

1. Procédé de transmission d'informations d'un dispositif interrogateur vers des objets portatifs, dans lequel la transmission s'effectue par modulation d'amplitude d'une onde porteuse radioélectrique pendant certains intervalles de temps dits "impulsions" et par codage en position de ces impulsions, **caractérisé en ce que** :

   • la modulation d'amplitude est une modulation ternaire mettant en oeuvre un premier niveau d'amplitude (B), un deuxième niveau (A) inférieur au premier (B) et un troisième niveau (C) supérieur au premier (B), la modulation faisant passer soit du premier niveau (B.) au deuxième (A) et étant dite alors de polarité négative, soit du premier niveau (B) au troisième (C) et étant dite alors de polarité positive,

   • le codage en position est obtenu en formant deux impulsions ($I_1$, $I_2$) de polarités opposées dans un même motif, la position en question étant celle de la seconde impulsion ($I_2$) par rapport à la première ($I_1$).

2. Procédé selon la revendication 1, dans lequel les informations sont groupées en messages comprenant une suite de motifs associés chacun d'un symbole d'information, chaque motif comprenant une zone temporelle de codage (Z) découpée en N unités de temps identiques de durée Tc au moins égale à la durée des impulsions, la première impulsion ($I_1$) étant placée avant cette zone (Z) et la seconde ($I_2$) dans l'une quelconque des N unités de temps de la zone temporelle de codage (Z).

**3.** Procédé selon la revendication 2, dans lequel le nombre N d'unités de temps de la zone temporelle de codage (Z) est égal à $2^M$, où M est un entier, le symbole d'information transmis par chaque motif étant alors un mot binaire de M bits.

**4.** Procédé selon la revendication 2, dans lequel chaque message est organisé en trames, chaque trame comprenant un premier motif appelé fanion de début de trame (SOF) constitué d'une zone temporelle (Z) divisée en N unités de temps ($T_c$), d'une première impulsion ($I_1$) placée avant cette zone et d'une seconde impulsion ($I_2$) de même polarité que la première ($I_1$) et placée dans cette zone, ce fanion de début de trame (SOF) étant suivi de motifs associés aux symboles d'information du message.

**5.** Procédé selon la revendication 4, dans lequel la seconde impulsion ($I_2$) du fanion de début de trame (SOF) est placée toujours dans la même unité de temps de la zone temporelle (Z).

**6.** Procédé selon la revendication 5, dans lequel la seconde impulsion ($I_2$) du fanion de début de trame (SOF) est placée dans la dernière unité de temps de la zone temporelle (Z).

**7.** Procédé selon la revendication 4, dans lequel la trame comprend en outre un dernier motif, appelé fanion de fin de trame (EOF), constitué d'une zone temporelle (Z) sans impulsion et d'une impulsion ($I_1$) placée avant cette zone.

**8.** Procédé selon la revendication 4, dans lequel un premier temps de garde ($Tg_1$) de durée égale à un multiple ($K_1$) de l'unité de temps ($T_c$) est ménagé entre la première impulsion ($I_1$) et le début de la zone temporelle (Z).

**9.** Procédé selon la revendication 8, dans lequel un second temps de garde ($Tg_2$) de durée égale à un multiple ($K_2$) de l'unité de temps ($T_c$) est ménagé après la zone temporelle (Z).

**10.** Procédé selon la revendication 4, dans lequel, dans chaque motif, la zone temporelle (Z) est suivie d'un temps d'attente ($T_a$).

**11.** Procédé selon la revendication 10, dans lequel on modifie la durée du temps d'attente ($T_a$) d'un motif à l'autre selon les conditions de transmission.

**12.** Procédé selon la revendication 10, dans lequel on modifie la durée du temps d'attente ($T_a$) en fonction de la longueur des messages que peuvent ré-émettre les objets portatifs.

**13.** Procédé selon l'une quelconque des revendications précédentes, dans lequel la première impulsion ($I_1$) est une impulsion de polarité négative.

**14.** Procédé selon l'une quelconque des revendications précédentes, dans lequel la modulation d'amplitude présente un indice de modulation inférieur à 50%.

**Patentansprüche**

**1.** Verfahren zur Informationsübertragung von einer Abfragevorrichtung zu tragbaren Gegenständen, bei dem die Übertragung durch Amplitudenmodulation einer HF-Trägerwelle während bestimmter Zeitintervalle, "Impulse" genannt, und durch Positionscodierung dieser Impulse erfolgt,
**dadurch gekennzeichnet:**

- **dass** die Amplitudenmodulation eine temäre Modulation ist, die ein erstes Amplitudenniveau (B), ein zweites Niveau (A), niedriger als das erste (B), und ein drittes Niveau (C), höher als das erste (B), benutzt, wobei die Modulation entweder einen Übergang vom ersten (B) zum zweiten (A) und dann Negativpolarität genannten Niveau oder vom ersten (B) zum dritten (C) und dann Positivpolarität genannten Niveau bewirkt,
- die Positionscodierung erhält man, indem man in einem selben Muster zwei Impulse ($I_1$, $I_2$) mit entgegengesetzter Polarität bildet, wobei die betreffende Position die des zweiten Impulses ($I_2$) in Bezug auf den ersten ($I_1$) ist.

**2.** Verfahren nach Anspruch 1, bei dem die Informationen zu Nachrichtengruppen zusammengefasst werden, die eine Folge von Mustern umfassen, von denen jedes einem Informationssymbol zugeordnet ist, wobei jedes Muster eine Codierzeitzone (Z) umfasst, unterteilt in N gleiche Zeiteinheiten der Dauer Tc gleich wenigstens der Dauer der Impulse, wobei sich der erste Impuls ($I_1$) vor dieser Zone (Z) befindet und der zweite ($I_2$) in irgendeiner der N Zeiteinheiten der Codierzeitzone (Z).

**3.** Verfahren nach Anspruch 2, bei dem die Anzahl N der Zeiteinheiten in der Codierzeitzone (Z) gleich $2^M$ ist, wo M eine ganze Zahl ist und das für jedes Muster übertragene Informationssymbol dann ein binäres Wort mit M Bit ist.

**4.** Verfahren nach Anspruch 2, bei dem jede Nachricht durch Übertragungsblöcke gebildet wird, wobei jeder Übertragungsblock ein erstes Muster umfasst, Startblockbegrenzung (SOF) genannt, gebildet durch eine in N Zeiteinheiten ($T_c$) unterteilte Zeitzone (Z) eines ersten Impulses ($I_1$), vor dieser Zone befindlich, und eines zweiten Impulses ($I_2$) mit der-

selben Polarität wie der erste (I₁) und in dieser Zone befindlich, wobei auf diese Startblockbegrenzung (SOF) Muster folgen, die den Informationssymbolen der Nachricht zugeordnet sind.

5. Verfahren nach Anspruch 4, bei dem der zweite Impuls (I₂) der Startblockbegrenzung (SOF) sich immer in der ersten Zeiteinheit der Zeitzone (Z) befindet.

6. Verfahren nach Anspruch 5, bei dem der zweite Impuls (I₂) der Startblockbegrenzung (SOF) sich in der letzten Zeiteinheit der Zeitzone (Z) befindet.

7. Verfahren nach Anspruch 4, bei dem der Übertragungsblock außerdem ein letztes Muster enthält, Schlussblockbegrenzung (EOF) genannt, gebildet durch eine Zeitzone (Z) ohne Impuls und einen vor dieser Zone befindlichen Impuls (I₁).

8. Verfahren nach Anspruch 4, bei dem eine erste Abstandszeit (temps de garde) (Tg₁) gleich der Dauer eines Vielfachen (K₁) der Zeiteinheit (T_c) vorgesehen ist zwischen dem ersten Impuls (I₁) und dem Beginn der Zeitzone (Z).

9. Verfahren nach Anspruch 8, bei dem eine zweite Abstandszeit (temps de garde) (Tg₂) gleich der Dauer eines Vielfachen (K₂) der Zeiteinheit (T_c) nach der Zeitzone (Z) vorgesehen ist.

10. Verfahren nach Anspruch 4, bei dem auf die Zeitzone (Z) in jedem Muster eine Wartezeit (T_a) folgt.

11. Verfahren nach Anspruch 10, bei dem man die Wartezeitdauer (T_a) von einem Muster zum nächsten entsprechend den Übertragungsbedingungen modifziert.

12. Verfahren nach Anspruch 10, bei dem man die Wartezeitdauer (T_a) in Abhängigkeit von der Länge der Nachrichten modifiziert, welche die tragbaren Gegenstände umsetzen bzw. wiederausstrahlen können.

13. Verfahren nach einem der vorangehenden Ansprüche, bei dem der erste impuls (I₁) ein Impuls mit negativer Polarität ist.

14. Verfahren nach einem der vorangehenden Ansprüche, bei dem die Amplitudenmodulation einen Modulationsindex unter 50 % hat.

## Claims

1. A method for transmitting information from an interrogator system to portable objects; in this method the information is transmitted through radio carrier wave amplitude modulation over several time intervals called "pulses" and positional coding of these pulses, the characteristics of which are as follows:

- ternary amplitude modulation is used in which the first amplitude level (B) is used with a second level (A) below the first and a third level (C) above the first (B), whereby the modulation either passes from the first level (B) to the second (A) (and is then called negative polarity) or from the first level (B) to the third (C) (and is then called positive polarity);
- positional coding is obtained by forming two opposite-polarity pulses (I₁ and I₂) in the same pattern, in which the position concerned is that of the second pulse (I₂) relative to the first (I₁).

2. A method in accordance with claim 1, whereby the information is grouped into messages made up of a sequence of patterns and whereby each of said patterns is associated with an information symbol and contains a code time area (Z) divided into N identical time units, each of T_c length where T_c at least equals the length of the pulses (I₁) in any of the N time units in the code time area (Z).

3. A method in accordance with claim 2, whereby the number of time units (N) within the code time area (Z) equals $2^M$, where M is an integer; the information symbol transmitted by each pattern then consists in a binary word containing M bits.

4. A method in accordance with claim 2, whereby each message is structured in frames, each of which is made up of a first pattern called the Start Of Frame (SOF) marker comprised of a time area (Z) divided into N time units (T_c), a first pulse (I₁) placed before this area and a second pulse (I₂) with the same polarity as the first (I₁) and, within this area, the said Start of Frame (SOF) marker, which is followed by patterns associated with the message's information symbols.

5. A method in accordance with claim 4, whereby the Start Of Frame (SOF) marker's second pulse (I₂) is always placed in the same time unit in the time area (Z).

6. A method in accordance with claim 5, whereby the Start Of Frame (SOF) marker's second pulse (I₂) is always placed in the last time unit in the time area (Z).

7. A method in accordance with claim 4, whereby the frame also contains a last pattern, called the End Of Frame (EOF) marker, made up of a time area (Z) with no pulse and a pulse (I₁) placed before said area.

8. A method in accordance with claim 4, whereby a first guard time ($T_{g1}$), the duration of which is a multiple ($K_1$) of the time unit ($T_c$), is placed between the first pulse ($I_1$) and the end of the time area (Z).

9. A method in accordance with claim 8, whereby a second guard time ($Tg_2$), the duration of which is a multiple ($K_2$) of the time unit ($T_c$), is placed after the time area (Z).

10. A method in accordance with claim 4, whereby, in each pattern, the time area (Z) is followed by a wait time ($T_a$).

11. A method in accordance with claim 10, whereby the length of the wait time ($T_a$) is modified for different patterns depending on transmission conditions.

12. A method in accordance with claim 10, whereby the length of the wait time ($T_a$) is modified depending on the length of the messages that the portable objects retransmit.

13. A method in accordance with one of the above claims, whereby the first pulse ($I_1$) is of negative polarity.

14. A method in accordance with any one of the above claims, whereby the amplitude modulation index is lower than 50%.

FIG.1

EP 1 181 796 B1

EP 1 181 796 B1

FIG. 2

FIG. 3

9

EP 1 181 796 B1

SOF ⟋     S1 ⟋     S2 ⟋     EOF ⟋

$T_s$    $T_a$    $T_s$    $T_a$    $T_s$    $T_a$    $T_s$

$T_g$    $T_g$    $T_g$    $T_g$

$T_m$    $T_m$    $T_m$

FIG. 4

SOF ⟋     DEB_SEQ ⟋     Lect1 ⟋     Lect0 ⟋

FIG. 5

BIP ⟋          BIP ⟋